# EUROPEAN PATENT SPECIFICATION

(11) **EP 2 898 781 B1**
(45) Date of publication and mention of the grant of the patent: **14.10.2020**
(21) Application number: 13839814.4
(22) Date of filing: 18.06.2013
(51) Int. Cl.: A23L 5/10, A23L 3/36, B65D 81/34, A23L 7/113

(54) **PACKAGED FROZEN NOODLE FOR MICROWAVE COOKING**
VERPACKTE TIEFGEFRORENE NUDELN FÜR DIE MIKROWELLE
NOUILLES CONGELÉES EMBALLÉES POUR UNE CUISSON À MICRO-ONDES

(30) Priority: 20.09.2012 JP 2012206457; 18.10.2012 CN 201210396533
(43) Date of publication of application: 29.07.2015
(73) Proprietor: Nisshin Foods Inc., Tokyo 101-8441 (JP)
(72) Inventor: IRIE, Kentarou, Fujimino-shi Saitama 356-8511 (JP); SUGA, Youhei, Fujimino-shi Saitama 3568511 (JP); KOIZUMI, Norio, Fujimino-shi Saitama 3568511 (JP); WATANABE, Takenori, Fujimino-shi Saitama 356-8511 (JP); MIYA, Youichirou, Fujimino-shi Saitama 3568511 (JP); YOSHIDA, Tsuguhiko, Tokyo 1018441 (JP)
(74) Representative: Blodig, Wolfgang
(86) International application number: PCT/JP2013/066651
(87) International publication number: WO 2014/045652

(56) References cited:
- CA-A1- 2 265 082
- JP-A- H02 413
- JP-A- H 053 776
- JP-A- H 089 912
- JP-A- S61 173 028
- JP-A- S62 282 556
- JP-A- 2005 176 708
- JP-B2- H0 365 143

## Description

### [Technical Field]

The present invention relates to a method for preventing quality deterioration in frozen noodles which can be thawed with microwaves while being kept in a package.

### [Background Art]

With popularization of microwave ovens, food is heat-cooked with microwaves on a daily basis. Microwave heating is advantageous in that food is efficiently heated in a short time as microwaves penetrate into food to directly heat the water molecules contained in the food.

Conversely, a problem of microwave heating is uneven heating caused by concentration of microwaves at a specific part of food. Previously, even after heating frozen food with microwaves, some parts were still frozen, while other parts were getting warmed up in the food due to uneven heating in some cases. On the other hand, when frozen food was heated with microwaves until the entire food was thawed, an excessively heated part became dry or hardened in some cases. Quality deterioration caused by such uneven heating is particularly noticeable with noodles because they contain large amounts of starchy materials, and further, have their unique appearance and texture.

Frozen noodles which retain a favorable quality even after thawing by using a microwave oven and methods for producing the same have been previously proposed. Patent Literature 1 describes a method for producing frozen noodles, including allowing water to attach to the surface of frozen noodles, and then quickly re-freezing the noodles. Patent Literature 2 describes a method for producing frozen noodles, including imparting 8 to 17% by weight of water to pregelatinized noodles, and then freezing the noodles. However, even in these frozen noodles, quality deterioration in noodles caused by uneven heating has not been fully prevented.

Another problem of microwave heating is bumping caused by a rapid rise in the internal temperature of food. Particularly, when packaged frozen noodles with sauces and dressing were heated with microwaves, violent bumping and the resulting scattering of food were occasionally observed due to an abrupt rise in the internal pressure of package.

Methods for preventing bumping of food and the resulting scattering of food during microwave heating have been previously proposed. Patent Literature 3 describes a food container for heating by using a microwave oven provided with a steam-controlling hole through which steam is discharged when the internal pressure exceeds a certain level. Also, Patent Literature 4 describes a heating container for a microwave oven provided with a lid having a vent hole, which is sealed by a removable sealing member. Also, Patent Literature 5 describes packaged boiled noodles for microwave irradiation, wherein the noodles are packaged in a packaging container provided with a ventilation hole or ventilation holes of a specific size on the side to be irradiated with microwaves. However, while these techniques were effective for preventing the bursting of containers and bumping of heated food to some extent, they were not satisfactory in terms of preventing quality deterioration in food caused by uneven heating and excessive heating.

### [Citation List]

### [Patent Literature]

[Patent Literature 1] JP-B-3-65143
[Patent Literature 2] JP-A-8-9912
[Patent Literature 3] JP-A-62-282556
[Patent Literature 4] JP-A-61-173028
[Patent Literature 5] JP-A-2005-176708

### [Summary of Invention]

### [Technical Problem]

An object of the present invention is to prevent uneven heating and bumping of frozen noodles caused by microwave heating and to provide frozen noodles which can retain a favorable quality even after microwave thawing.

### [Solution to Problem]

The present inventors conducted intensive studies. As a result, they have found that heating time per package by microwave heating can be shortened, and further, uneven heating and quality deterioration in noodles can be effectively prevented by packing cooked noodles and a certain amount of water in a package having a ventilation hole or ventilation holes having a specific size, and then freezing them.

The present invention provides a method for preventing quality deterioration in frozen noodles caused by microwave cooking comprising:
putting cooked noodles in a package having a ventilation hole or ventilation holes, wherein a total area of an opening of the ventilation hole or openings of the ventilation holes is 0.02 to 5 cm² per 100 cm² of a surface area of the package; wherein to the cooked noodles 3 to 7 parts by mass of water relative to 100 parts by mass of the cooked noodles is attached by spraying or adding and mixing and
freezing the cooked noodles and the water.

### [Advantageous Effects of Invention]

The present invention can shorten the heating time of frozen noodles by microwave heating, while preventing uneven heating, and prevent quality deterioration in noodles caused by microwave cooking of frozen noodles. Accordingly, the frozen noodles are not unevenly heated even when they are thawed with microwaves, and also, have a favorable appearance and texture after thawing.

### [Description of Embodiments]

The packaged frozen noodles for microwave cooking are frozen noodles which are intended to be eaten after thawing by microwave heating. The packaged frozen noodles for microwave cooking are provided as it is packed in a package, and are thawed by microwave heating while being kept in the package.

The packaged frozen noodles for microwave cooking have a package having a ventilation hole or ventilation holes. While the ventilation hole or holes may be disposed at any part of the surface of the package, it is preferably disposed on the side to be irradiated with microwaves. Also, preferably, from the viewpoint of preventing dripping during heat thawing, the ventilation hole or holes is preferably not present at a part located on the side to be facing down during microwave heating.

The total area of the openings of the aforementioned ventilation hole or holes is 0.02 to 5 cm², preferably 0.1 to 3 cm² per 100 cm² of the surface area of the aforementioned package. When the total area of the ventilation hole or holes is smaller than 0.02 cm², the package has an increased risk of bursting due to increased internal pressure during microwave heating, and uneven heating is also caused easily. On the other hand, when the total area of the ventilation hole or holes is larger than 5 cm², a considerable amount of steam escapes from the package, increasing the time required for heating noodles as well as easily causing uneven heating.

According to a preferable aspect, the number of the aforementioned ventilation hole or holes is five or more per 100 cm² of the surface area of the aforementioned package. When the number of ventilation holes is less than five, the size of the ventilation hole per position becomes too large, possibly allowing noodles to slip out of the package. Also, according to a preferable aspect, the opening of each ventilation hole has a size of 0.1 to 5.0 mm, preferably 0.8 to 4.0 mm in a maximum length.

The shape of the aforementioned ventilation hole can be formed in any shape such as a circle, a triangle, a square, an oval, a slit and a star. From the viewpoint of tear resistance, a circle is preferable. The ventilation holes each may have the same shape and size, or different shapes and sizes. Also, the ventilation holes may be disposed apart from each other, or may be disposed such that the openings thereof are positioned adjacently each other (such as a dot-like or network-like pattern). Preferably, the ventilation hole or holes have such a shape and disposition as to allow passage of steam but not noodles. For example, when the ventilation hole or holes have such a shape that may allow passage of noodles, the ventilation hole or holes are preferably disposed on the side to be facing up during microwave heating.

The aforementioned package is produced from a microwave-permeable material. The package may be entirely composed of a microwave-permeable material, or partly composed of a material which can reflect or absorb microwaves. For example, a microwave-permeable material may be disposed in a package such that at least noodles and water inside are irradiated with microwaves. The microwave-permeable material is preferably such a material that does not absorb water produced during thawing of noodles. Examples of a preferable microwave-permeable material include polyethylene terephthalate, crystallized polyethylene terephthalate, polypropylene, polyethylene, polystyrene, and a composite material of these materials. Materials which can reflect microwaves may be aluminum and the like.

Also, a material constituting the aforementioned package preferably has a piercing strength of 10 N or higher. By increasing the piercing strength, the package can achieve a certain strength despite the possession of the ventilation hole or holes, whereby the package becomes more resistant to piercing by the sharp part of the frozen noodles inside, and also, to damage such as tearing and ripping during transport and handling. The piercing strength of the material can be adjusted by appropriately modifying the degree of polymerization of polymers, thickness, lamination, and the like of the aforementioned material. In the present specification, the piercing strength refers to a value measured in accordance with the "piercing strength test" described in the "Specifications and Standards for Foods, Food Additives, etc." under the Food Sanitation Act of Japan.

The size of the aforementioned package may be changed in accordance with the noodles to be contained therein and the package preferably has approximately 105 to 300% by volume relative to 100% by volume of the frozen noodles. Preferably, the aforementioned package has a height of approximately 2 to 15 cm and a width and depth of approximately 8 to 30 cm. As the shape of the aforementioned package, various shapes such as a bag, a cup and a tray are mentioned. The aforementioned package may also have a lid, which has the aforementioned ventilation hole or holes and is firmly adhered to the container body (for example, a pushing lid, a slip-on lid and a pillared lid). The aforementioned package may also be provided in a state of being further sealed in another package such as a wrap, a film and a bag, or in a state in which the ventilation hole or holes are sealed with top seal and the like. The another packages or seals protect the aforementioned package and the frozen noodles contained therein until the time of microwave heating, and are removed upon microwave heating.

The packaged frozen noodles for microwave cooking of the present invention are produced by putting cooked noodles and a certain amount of water in the aforementioned package.

The cooked noodles to be put in the aforementioned package are not particularly limited as long as they are cooked noodles which can be heated with microwaves. Examples of the cooked noodles include, but are not limited to, long pasta such as Japanese thick noodles(udon), Japanese buckwheat noodles(soba), Chinese noodle and spaghetti, short pasta such as macaroni and penne, and filled pasta such as ravioli. Also, the aforementioned noodles encompass those which are provided with seasoning liquids such as sauces and dressings, for example, those which are entirely mixed with a sauce and those which have a sauce put on top of the noodle mass.

The aforementioned cooked noodles may be put in the aforementioned package in an amount corresponding to servings for many people (for example, 1 kg) together, or in an amount corresponding to servings for a small number of people or a serving for one person (for example, 150 to 300 g).

Water to be put in the aforementioned package can be water commonly used for food such as tap water and purified water. The amount of water to be put in the package is 3 to 7 parts by mass relative to 100 parts by mass of the aforementioned cooked noodles. When the amount of water is less than one part by mass, the time required for microwave heating is prolonged, and moreover, uneven heating occurs. On the other hand, when the amount of water exceeds 10 parts by mass, noodles after heating become watery or the texture after heating is deteriorated due to uneven heating resulting from excessive heating.

The aforementioned water may be put inside the aforementioned package. For example, the water may be put in the bottom of the aforementioned package, allowed to cover the surface of the aforementioned cooked noodles, or put above, on the side of, or below the cooked noodles.

The aforementioned cooked noodles have the aforementioned water attached thereto. A means for allowing water to attach to the aforementioned cooked noodles is a means capable of allowing water to attach to the entire surface of the noodles, such means include spraying or adding and mixing

The aforementioned cooked noodles and water are put in the aforementioned package in an unfrozen state.

For example, the packaged frozen noodles for microwave cooking of the present invention can be produced by molding the aforementioned cooked noodles in such a shape that can be put in the aforementioned package and allowing a certain amount water to attach to the surface of the noodles, followed by freezing the resultant noodles and then putting them in the package or followed by putting the noodles in the package and then freezing them.

As a freezing treatment of the aforementioned cooked noodles and water, a freezing treatment commonly applied to food can be adopted. For example, the package filled with the aforementioned cooked noodles and water are subjected to a freezing treatment after sealing the ventilation hole or holes and/or sealing the package by further packing it in another package such as an outer bag or an outer case, as needed. As the freezing treatment, either quick freezing or slow freezing can be adopted, and quick freezing is preferable. Once the noodles are quickly frozen, they may be stored under normal frozen-storage conditions.

The packaged frozen noodles for microwave cooking are heated with microwaves while being kept in the aforementioned package. Microwave heating may be carried out in a similar manner to thawing of common frozen noodles. For example, in the case of heating 260 g of cooked spaghetti, microwave heating can be carried out at 500 W for approximately four minutes. Also, when the ventilation hole or holes of the aforementioned package are sealed with seal and/or the aforementioned package is further sealed with another package, microwave heating is carried out after removing the seal and/or another package.

The packaged frozen noodles for microwave cooking are less likely to be heated unevenly and cause bumping during microwave heating. Accordingly, in the noodles obtained by heating the packaged frozen noodles for microwave cooking with microwaves, drying and hardening of noodles due to uneven heating or damage caused by bumping is prevented, whereby quality deterioration caused by microwave cooking is prevented and a favorable appearance and texture are maintained.

### [Examples]

Hereinbelow, the present invention will be described further in detail with reference to Examples; however, the present invention is not limited only to these Examples.

In the following Examples, the piercing strength test was performed in accordance with the "piercing strength test" described in the "Specifications and Standards for Foods, Food Additives, etc." under the Food Sanitation Act of Japan. A measurement sample was immobilized and the surface of the sample was punctured by a needle having a diameter of 1.0 mm and a semicircular shaped tip with a radius of 0.5 mm, at a speed of 50 ± 5 mm/minute, and the maximum load (N: Newton) required for passing of the needle through the sample was measured.

### (Production Examples 1 to 6)

After boiling commercially available dried spaghetti until a yield of 230% was obtained, the spaghetti was cooled in cold water. After thoroughly draining, the spaghetti was divided in trays at 180 g per tray, and water was sprayed in amounts shown in Table 1 to attach to the entire spaghetti. Spaghetti having water attached thereto was quickly frozen at -20°C. Packages made of a polyethylene film having a strength of 12 N, which have 20 circular ventilation holes each having a diameter of 0.1 cm (the area of the opening of the ventilation hole: 0.00785 cm²) per 100 cm² (the total area of the openings of the ventilation holes on the package: 0.16 cm²/100 cm²), were prepared. These packages were filled with the aforementioned frozen spaghetti, whereby frozen packaged spaghettis were produced.

### (Test Example 1)

The frozen packaged spaghettis of Production Examples 1 to 6 were heated by using a microwave oven at 500 W until the product temperature at the center reached 60°C, and heating time was measured. After verifying the presence or absence of damage in the packages after heating, products with no damage were evaluated by 10 panelists for the smoothness and texture of the noodle based on the evaluation criteria shown in Table 2. The average values of the results of evaluation are shown in Table 1.

**[Table 1]**

| | Product ion Example 1 | Product ion Example 2 | Product ion Example 3 | Product ion Example 4 | Product ion Example 5 | Product ion Example 6 | Product ion Example 7 | Product ion Example 8 |
|---|---|---|---|---|---|---|---|---|
| Amount of water g (part by mass^{*1}) | 0 (0) | 0.9 (0.5) | 1.8 (1) | 5.4 (3) | 12.6 (7) | 18.0 (10) | 21.6 (12) | 27.0 (15) |
| Total area of openings of ventilatio n holes cm^{2 *2} | 0.16 | 0.16 | 0.16 | 0.16 | 0.16 | 0.16 | 0.16 | 0.16 |
| Number of ventilatio n holes ^{*2} | 20 | 20 | 20 | 20 | 20 | 20 | 20 | 20 |
| Heating time | 3 min. 25 sec. | 3 min. 25 sec. | 3 min. 25 sec. | 3 min. 18 sec. | 3 min. 25 sec. | 3 min. 28 sec. | 3 min. 48 sec. | 3 min. 55 sec. |
| Damage in package | No | No | No | No | No | No | No | No |
| Quality of spaghetti | 1.8 | 2.2 | 3.8 | 4.7 | 4.3 | 3.9 | 2.0 | 1.7 |
| Uneven heating | 1.6 | 1.9 | 3.9 | 4.8 | 4.2 | 3.7 | 2.5 | 2.1 |

| | | | | | | | | |
|---|---|---|---|---|---|---|---|---|
| *1: Part by mass relative to 100 parts by mass of spaghetti *2: Per 100 cm² of the surface area of the package | | | | | | | | |

**[Table 2]**

| | | |
|---|---|---|
| Quality of spaghetti | 5 | Spaghetti is excellent with superior smoothness and adequate elasticity |
| | 4 | Spaghetti is favorable with smoothness and elasticity |
| | 3 | Spaghetti slightly lacks smoothness and elasticity |
| | 2 | Spaghetti is poor as it is slightly crumbly and less elastic |
| | 1 | Spaghetti is very poor as it is crumbly and deficient in elasticity |
| Uneven heating | 5 | Spaghetti is excellent without any hardened or tepid part |
| | 4 | Spaghetti is almost favorable despite some slightly tepid parts |
| | 3 | Spaghetti is slightly poor as hardened parts or cold parts due to insufficient heating are slightly noticed |
| | 2 | Spaghetti is poor as it is partly dry, hardened, or cold due to insufficient heating |
| | 1 | Spaghetti is very poor as it is largely dry, hardened, or cold due to insufficient heating |

### (Production Examples 9 to 14)

Except for changing the size of the ventilation hole of the package as shown in Table 3, the frozen packaged spaghettis of Production Examples 9 to 14 were produced by the same procedure as in Production Example 4.

### (Test Example 2)

The frozen cooked spaghettis of Production Examples 9 to 14 were evaluated by the same procedure as in Test Example 1. The results are shown in Table 3. Also, the results of Production Example 4 are shown again in Table 3.

**[Table 3]**

| | Product ion Example 9 | Product ion Example 10 | Product ion Example 11 | Product ion Example 4 | Product ion Example 12 | Product ion Example 13 | Product ion Example 14 |
|---|---|---|---|---|---|---|---|
| Amount of water g (part by mass^{*1}) | 5.4 (3) | 5.4 (3) | 5.4 (3) | 5.4 (3) | 5.4 (3) | 5.4 (3) | 5.4 (3) |
| Total area of openings of ventilation holes cm^{2 *2} | 0.008 | 0.02 | 0.08 | 0.16 | 2.95 | 4.91 | 6.87 |
| Maximum length of opening of ventilation hole cm | 0.05 | 0.05 | 0.1 | 0.1 | 0.5 | 0.5 | 0.5 |
| Number of ventilation holes ^{*2} | 4 | 10 | 10 | 20 | 15 | 25 | 35 |
| Heating time | 3 min. 18 sec. | 3 min. 18 sec. | 3 min. 18 sec. | 3 min. 18 sec. | 3 min. 22 sec. | 3 min. 26 sec. | 3 min. 45 sec. |
| Damage in package | No^{*3} | No | No | No | No | No | No |
| Quality of spaghetti | 1.8 | 3.0 | 4.0 | 4.7 | 4.5 | 4.2 | 2.8 |
| Uneven heating | 1.5 | 3.3 | 4.3 | 4.8 | 4.6 | 4.2 | 3.1 |

| | | | | | | | |
|---|---|---|---|---|---|---|---|
| *1: Part by mass relative to 100 parts by mass of spaghetti *2: Per 100 cm² of the surface area of the package *3: Package was puffed up pretty tight with steam. | | | | | | | |

### (Production Examples 15 to 17)

Except for replacing the package made of a polyethylene film having a strength of 8, 10 or 12 N, the frozen packaged spaghettis of Production Examples 15 to 17 were produced (120 pieces per Production Example) by the same procedure as in Production Example 4.

### (Test Example 4)

The strength of the package was checked. The frozen packaged spaghettis of Production Examples 15 to 17 were separately packed in cardboard boxes (20 packages per Production Example), whereby five cardboard boxes were obtained per Production Example. The cardboard boxes thus obtained were dropped five times from a height of 60 cm and then opened to verify how much damage was caused in the package. The number of damaged packages is shown in Table 4.

**[Table 4]**

| | Production Example 15 | Production Example 16 | Production Example 17 |
|---|---|---|---|
| Piercing strength N | 8 | 10 | 12 |
| Number of damaged package/number of test | 3/100 | 0/100 | 0/100 |

## Claims

1. A method for preventing quality deterioration in frozen noodles caused by microwave cooking comprising:
putting cooked noodles in a package having a ventilation hole or ventilation holes, wherein a total area of an opening of the ventilation hole or openings of the ventilation holes is 0.02 to 5 cm² per 100 cm² of a surface area of the package, wherein to the cooked noodles 3 to 7 parts by mass of water relative to 100 parts by mass of the cooked noodles is attached by spraying or adding and mixing; and
freezing the cooked noodles and the water.

2. The method according to claim 1, wherein the water is attached to the entire surface of the cooked noodles.

3. The method according to claim 1, wherein the package is produced from a material having a piercing strength of 10 N or higher.

4. The method according to any one of claim 1 to 3, wherein a maximum length of the opening of the ventilation hole is 0.1 to 5.0 mm.

5. The method according to any one of claims 1 to 4, wherein five or more ventilation holes are provided on a side to be irradiated with microwaves of the package per 100 cm² of a surface area of the package.

6. The method according to any one of claims 1 to 5, wherein the ventilation hole is circular.

## Patentansprüche

1. Verfahren zur Verhinderung der Qualitätsverschlechterung bei gefrorenen Nudeln, die durch Kochen mit der Mikrowelle verursacht wird, umfassend:
Einbringen von gekochten Nudeln in eine Verpackung mit einem Belüftungsloch oder Belüftungslöchern, wobei die Gesamtfläche der Öffnung des Belüftungslochs oder der Öffnungen der Belüftungslöcher 0,02 bis 5 cm² pro 100 cm² der Oberfläche der Verpackung beträgt, wobei den gekochten Nudeln 3 bis 7 Massenteile Wasser, bezogen auf 100 Massenteile der gekochten Nudeln, durch Sprühen oder Zugeben und Mischen angelagert werden; und
Einfrieren der gekochten Nudeln und des Wassers.

2. Verfahren nach Anspruch 1, wobei das Wasser auf der gesamten Oberfläche der gekochten Nudeln angelagert wird.

3. Verfahren nach Anspruch 1, wobei die Verpackung aus einem Material hergestellt wird, das eine Durchstoßfestigkeit von 10 N oder höher aufweist.

4. Verfahren nach einem der Ansprüche 1 bis 3, wobei die maximale Länge der Öffnung des Belüftungslochs 0,1 bis 5,0 mm beträgt.

5. Verfahren nach einem der Ansprüche 1 bis 4, wobei fünf oder mehr Belüftungslöcher an der Seite der Packung, die mit Mikrowellen bestrahlt werden soll, pro 100 cm² des Oberflächenbereichs der Packung vorgesehen sind.

6. Verfahren nach einem der Ansprüche 1 bis 5, wobei das Belüftungsloch kreisförmig ist.

## Revendications

1. Procédé pour empêcher une détérioration de la qualité de nouilles congelées provoquée par une cuisson à micro-ondes comprenant :
placer des nouilles cuites dans un emballage ayant un trou de ventilation ou des trous de ventilation, dans lequel une aire totale d'une ouverture du trou de ventilation ou d'ouvertures des trous de ventilation est de 0,02 à 5 cm² par 100 cm² d'une superficie de l'emballage, dans lequel 3 à 7 parts en masse d'eau par rapport à 100 parts en masse de nouilles cuites sont appliquées par pulvérisation ou ajout et mélange aux nouilles cuites ; et
congeler les nouilles cuites et l'eau.

2. Procédé selon la revendication 1, dans lequel l'eau est appliquée à l'ensemble de la surface des nouilles cuites.

3. Procédé selon la revendication 1, dans lequel l'emballage est produit en un matériau ayant une résistance au perçage de 10 N ou supérieure.

4. Procédé selon l'une des revendications 1 à 3, dans lequel une longueur maximum de l'ouverture du trou de ventilation est de 0,1 à 5,0 mm.

5. Procédé selon l'une des revendications 1 à 4, dans lequel cinq trous de ventilation ou plus sont prévus d'un côté de l'emballage à irradier par micro-ondes par 100 cm² d'une superficie de l'emballage.

6. Procédé selon l'une des revendications 1 à 5, dans lequel le trou de ventilation est circulaire.
